(19) Europäisches Patentamt / European Patent Office / Office européen des brevets

(11) **EP 2 410 305 A1**

(12) **EUROPÄISCHE PATENTANMELDUNG**

(43) Veröffentlichungstag:
   **25.01.2012 Patentblatt 2012/04**

(51) Int Cl.:
   **G01J 5/00** (2006.01)

(21) Anmeldenummer: **10170308.0**

(22) Anmeldetag: **21.07.2010**

(84) Benannte Vertragsstaaten:
   **AL AT BE BG CH CY CZ DE DK EE ES FI FR GB GR HR HU IE IS IT LI LT LU LV MC MK MT NL NO PL PT RO SE SI SK SM TR**
   Benannte Erstreckungsstaaten:
   **BA ME RS**

(71) Anmelder: **SIEMENS AKTIENGESELLSCHAFT**
   **80333 München (DE)**

(72) Erfinder:
   • **Hartl, Franz**
     **Kalham (AT)**
   • **Kurzmann, Thomas**
     **4020 Linz (AT)**
   • **Wiebe, Friedhelm**
     **4600 Weis (AT)**

(54) **Verfahren zur Ermittlung einer Temperatur von Flüssigmetall, Signalverarbeitungseinrichtung und metallurgische Vorrichtung**

(57)    Die Erfindung betrifft eine metallurgische Vorrichtung, eine Signalverarbeitungseinrichtung und ein Verfahren zur Ermittlung einer Temperatur von Flüssigmetall (Mi), wobei das Flüssigmetall (Mi) aus einem einer metallurgischen Vorrichtung (1) zugeordneten Behältnis (2) mittels eines Abstechvorgangs ausgebracht wird, wobei das ausgebrachte Flüssigmetall (Mi) einen Abstichstrahl (A) bildet. Indem die Temperatur wenigstens eines Ausschnitts des Abstichstrahls (A) kontinuierlich während des Abstechvorgangs anhand vom Abstichstrahl (A) emittierter elektromagnetischer Strahlen ermittelt wird, und die aus den emittierten elektromagnetischen Strahlen ermittelte Temperatur unter Verwendung eines Emissionsgrads (Ei) ermittelt wird, wobei der zur Ermittlung der Temperatur herangezogene Emissionsgrad (Ei) abhängig von der Zusammensetzung des auszubringenden Flüssigmetalls (Mi) ist, kann ein Verfahren bereitgestellt werden, mit welchem eine Temperaturmessung an Flüssigmetall verschleißarm und mit hoher Genauigkeit durchgeführt werden kann.

FIG 1

**Beschreibung**

Die Erfindung betrifft ein Verfahren zur Ermittlung einer Temperatur von Flüssigmetall, wobei das Flüssigmetall aus einem einer metallurgischen Vorrichtung zugeordneten Behältnis mittels eines Abstechvorgangs ausgebracht wird, wobei das ausgebrachte Flüssigmetall einen Abstichstrahl bildet. Ferner betrifft die Erfindung eine Signalverarbeitungseinrichtung und eine Metallurgische Vorrichtung zur Herstellung und/oder Verarbeiten von Flüssigmetall.

Die Erfindung liegt auf dem technischen Gebiet der Metallurgie, insbesondere der Schmelzmetallurgie. Die Erfindung ist anwendbar für alle metallurgischen Gefäße, aus welchen Flüssigmetall ausgebracht wird. Insbesondere ist die Erfindung anwendbar für einen (Elektro-)Lichtbogenofen oder einen Konverter.

Bei der Herstellung und/oder Weiterverarbeitung von Metallschmelzen spielt die Temperatur eine wesentliche Rolle. Insbesondere hat ein Anheben oder eine Senken der mittleren Prozesstemperatur signifikante Auswirkungen auf die Wirtschaftlichkeit der Anlage bzw. deren Energieverbrauch. Das Vorliegen oder Nichtvorliegen bestimmter Temperaturen beeinflusst zudem das weitere metallurgische Vorgehen in nachfolgenden Prozessschritten.

Zur Bestimmung der Temperatur wird heute vor dem Abstich des jeweiligen metallurgischen Gefäßes die Temperatur des Flüssigmetallbads ermittelt. Hierzu werden Temperaturmesssonden etwa mittels einer Lanze manuell oder mittels eines Manipulators halbautomatisch in das Flüssigmetallbad eingebracht, insbesondere getaucht, und die Temperatur gemessen.

Bei vorliegenden Temperaturschwankungen innerhalb des Flüssigmetallbads führt dies dazu, dass die Temperatur des Flüssigmetallbads in der Regel nur punktuell bekannt ist.

Dies hat zur Folge, dass in den nachfolgenden Prozessen entsprechende Vorkehrungen zur Pufferung eventueller Ungenauigkeit vorgesehen werden müssen. Dies kann einerseits ein zeitlicher Puffer sein, oder bspw. auch ein Puffer an Zugabestoffen oder Kühlschrott für das Flüssigmetall, um die Ungenauigkeit der Temperaturmessung kompensieren zu können bzw. ein zusätzlicher Energiepuffer, mit welchem die Schmelze auf eine Soll-Temperatur aufgeheizt werden muss, bevor diese weiterprozessierbar ist.

Darüber hinaus hat das oben beschriebene Verfahren den Nachteil, dass die Messsonden in der Regel nicht wieder verwendet werden können und verschlissen sind.

Eine Temperaturmessung ist erst wieder bei einer nachfolgenden sekundärmetallurgischen Behandlungseinrichtung möglich oder bei der Stranggießanlage.

Aus dem Internetauftritt der BFI Betriebstechnik GmbH sind ein Messverfahren und eine Messvorrichtung zur kontinuierlichen Bestimmung der Temperatur bekannt. Die Temperaturmessung basiert auf dem Einsatz einer direkt in die Schmelze eingetauchten konventionellen optischen Faser, an deren Ende über ein Pyrometer die Temperatur ermittelt wird. Nachteilig hierbei ist, dass durch den direkten Kontakt mit der Schmelze die Glasfaser im Messbetrieb thermisch und chemisch angegriffen und verschlissen wird.

Der Erfindung liegt die Aufgabe zugrunde, ein möglichst genaue und verschleißarme Temperatur-Messung für Flüssigmetall bereitzustellen, sowie eine Signalverarbeitungseinrichtung und eine metallurgische Vorrichtung, geeignet zur Durchführung des Verfahrens.

Der verfahrensmäßige Teil der Aufgabe wird gelöst durch ein gattungsgemäßes Verfahren der eingangs genannten Art, wobei die Temperatur wenigstens eines Ausschnitts des Abstichstrahls kontinuierlich während des Abstechvorgangs anhand vom Abstichstrahl emittierter elektromagnetischer Strahlen unter Verwendung eines Emissionsgrads ermittelt wird, wobei der zur Ermittlung der Temperatur herangezogene Emissionsgrad abhängig von der Zusammensetzung des auszubringenden Flüssigmetalls ist bzw. ausgewählt wird.

Erst die Anpassung des Emissionsgrads an die Zusammensetzung des auszubringenden Flüssigmetalls erlaubt es, eine entsprechende Genauigkeit von $\pm$10 °C bei Flüssigmetall-Temperaturen von 1600 °C bis 1700 °C zu erreichen und damit metallurgischen Anforderungen hinsichtlich der Temperaturgenauigkeit zu genügen.

Herkömmliche kontaktlose Temperaturerfassungseinrichtungen, wie sie etwa für die Schlackenerkennung eingesetzt werden, sind für eine derart genaue Temperaturbestimmung ungeeignet. Dies liegt u.a. auch daran, dass für die Schlackeerkennung lediglich Temperaturdifferenzen von Bedeutung, nämlich zwischen Schlacke und Flüssigmetall, nicht jedoch absolute Temperaturen. Eine exakte absolute Temperaturmessung, wie sie für metallurgische Prozesse erforderlich ist, kann mit diesen Geräten nicht erfolgen.

Durch die erfindungsgemäße Vorgehensweise wird somit ein Verfahren bereitgestellt, welches es erlaubt eine sehr genaue Temperaturmessung kontaktlos und damit verschleißfrei durchzuführen.

In einer bevorzugten Ausführungsform des erfindungsgemäßen Verfahrens ist für eine Vielzahl an Zusammensetzungen des innerhalb des Behältnis erzeugten und/oder verarbeiteten Flüssigmetalls ein jeweiliger Emissionsgrad des jeweiligen Flüssigmetalls für die Ermittlung der Temperatur datentechnisch bekannt und, insbesondere aus einer Datenbank, abrufbar, wobei zur Ermittlung der Temperatur des auszubringenden Flüssigmetalls der zum auszubringenden Flüssigmetall korrespondierende Emissionsgrad automatisch abgerufen wird und zur Ermittlung der Temperatur für das Flüssigmetall herangezogen wird. Bspw. können die Emissionsgrade für unterschiedliche Zusammensetzungen des Flüssigmetalls in einer Tabelle hinterlegt sein. Vorzugsweise kann eine die Temperaturermittlung durchführende Signalverarbeitungseinrichtung auf Produktionsplanungsinformation zugreifen und dadurch identifizieren, welche Zusammensetzung das Flüssigmetall bzw. die Schmelze im Behältnis planmäßig aufweist und automatisch anhand dieser Informationen den entsprechenden Emissionsgrad aus einer Datenbank abrufen bzw. verwenden. Dadurch ist keine manuelle Eingabe des Emissionsgrads erforderlich. Hierdurch werden Fehler verringert und die Messgeschwindigkeit erhöht.

In einer weiteren vorteilhaften Ausgestaltung der Erfindung wird aus den ermittelten Temperaturen eine mittlere Temperatur des abgestochenen Flüssigmetallvolumens ermittelt. Die Ermittlung einer mittleren Temperatur ist metallurgisch von hoher Bedeutung, weil damit die Mischtemperatur des Flüssigmetalls sehr genau bekannt ist und metallurgisch in nachfolgenden Prozessschritten entsprechend reagiert werden kann. Bei Messungen mittels Probennahmen sind die Fehler vergleichsweise hoch, da die Temperaturschwankungen im Flüssigmetallbad unberücksichtigt bleiben. Bspw. kann aufgrund der genauen Kenntnis der mittleren Temperatur des Flüssigmetalls die Zuführung von Heizenergie erhöht werden, wenn festgestellt wird, dass die mittlere Temperatur des Flüssigmetalls zu gering ist, oder es können abhängig von der ermittelten mittleren Temperatur Zuschlagsstoffe wie Aluminium oder Kühlschrott in die Schmelze zugegeben werden.

In einer weiteren vorteilhaften Ausführungsform der Erfindung wird das ausgebrachte Flüssigmetall einer Pfanne zugeführt, wobei eine neue mittlere Temperatur für das Flüssigmetall unter Einbeziehung einer Temperatur der Pfanne ermittelt wird und/oder eine Temperatur der Pfanne in Abhängigkeit von der ermittelten mittleren oder neuen mittleren Temperatur des Flüssigmetalls eingestellt wird. Vorteilhaft ist es, zunächst eine neue mittlere Temperatur des Flüssigmetalls unter Einbeziehung der vorgesehenen Pfannentemperatur durchzuführen, um so eine Temperatur für das Flüssigmetall zu ermitteln, nachdem dieses vollständig in der Pfanne angeordnet und im thermischen Gleichgewicht ist. Hieraus lassen sich dann frühzeitig weitere Maßnahmen, wie Energieabfuhr oder -zufuhr ableiten. Ferner erlaubt es die Einstellung der Temperatur der Pfanne, frühzeitig auf die Ergebnisse der Temperaturermittlung zu reagieren. Hierdurch kann Zeit und/oder Energie gespart werden.

In einer bevorzugten Ausführungsform der Erfindung ist der Ausschnitt flächig ausgebildet und die Temperatur wird für den flächigen Ausschnitt räumlich gemittelt. Damit wird eine gemittelte Temperatur für den Ausschnitt erhalten. Die Mittelung kann bspw. durch die verwendete Messeinrichtung selbst erfolgen, indem die elektromagnetische Strahlung für einen bestimmten Erfassungsbereich gemittelt detektiert wird. Eine Mittelung kann jedoch auch nachträglich über Bildbearbeitung erfolgen, bspw. wenn zur Erfassung der elektromagnetischen Strahlen eine bildgebende Kamera, etwa eine CCD-, CMOS- oder Wärmebildkamera verwendet wurde. Vorzugsweise ist der Ausschnitt derart bemessen, dass dieser sich über die gesamte Strahlbreite des Abstichstrahls erstreckt.

In einer weiteren vorteilhaften Ausführungsform des erfindungsgemäßen Verfahrens wird die Temperatur auf Basis der kürzesten zur Messung verfügbaren Wellenlänge der vom Abstichstrahl emittierten elektromagnetischen Strahlen ermittelt. Dadurch wird der Messfehler gering gehalten, denn bei vielen Metallen nimmt der Messfehler mit zunehmender Wellenlänge zu. Durch die Verwendung der kürzesten zur Messung verfügbaren Wellenlänge wird somit die Genauigkeit weiter erhöht.

In einer weiteren vorteilhaften Variante des erfindungsgemäßen Verfahrens umfasst der Abstechvorgang ein Kippen des Behältnisses, wobei der Abstichstrahl während des Kippens seine Bahnkurve verändert, wobei die die elektromagnetische Strahlung detektierende Einrichtung der geänderten Bahnkurve des Abstichstrahls nachgeführt wird. Unter Bahnkurve wird dabei der vom Abstichstrahl beschriebene Wegverlauf bezeichnet. Aufgrund des Kippvorgangs kann es zu einer Änderung des Austrittswinkels des Flüssigmetalls aus dem Behältnis, der Austrittsposition des Flüssigmetalls aus dem Behältnis usw. kommen, was die Bahnkurve des Abstichstrahls verändert. Die Nachführung erfolgt vorzugsweise automatisiert oder in manueller Weise ferngesteuert. Durch die Nachführung wird sichergestellt, dass während des gesamten Abstechvorgangs die elektromagnetische Strahlung für den gewünschten Ausschnitt detektiert wird und dementsprechend ausgewertet werden kann. Die Nachführung der die elektromagnetische Strahlung detektierenden Einrichtung erhöht somit weiter die Messgenauigkeit, da der Abstichstrahl durch das Kippen des Behältnisses nicht "außer Sicht" gerät.

In einer weiteren vorteilhaften Ausführungsform der Erfindung wird die von einer Schlacke emittierte elektromagnetische Strahlung nicht zur Ermittlung der Temperatur des Flüssigmetalls herangezogen. Mit anderen Worten: Für die Temperaturermittlung wird im Wesentlichen nur elektromagnetische Strahlung verwendet, welche ausschließlich vom Flüssigmetall emittiert wurde. Da der Emissionsgrad zur Ermittlung der Temperatur aus der elektromagnetischen Strahlung auf das Flüssigmetall angepasst ist, führt die Anwendung dieses Emissionsgrads auf von der Schlacke emittierter elektromagnetischer Strahlung zu unerwünschten Fehlern bei der Temperaturermittlung. Diese können vermieden werden, indem bspw. im Rahmen einer Bildauswertung eine Selektion des auszuwertenden Bildbereichs erfolgt, z.B. mittels Pixelauswertung, d.h. nur Bildbereiche ausgewertet werden, die keine Schlacke aufweisen. Ggf. kann der Ausschnitt für den Abstichstrahl bei Beginn des Abstechvorgangs bereits derart festgelegt werden, z.B. via Ausrichtung der die elektromagnetische Strahlung erfassenden Einrichtung, dass nur ein geringer bis kein Schlackenanteil in diesem Ausschnitt zu erwarten ist.

In einer bevorzugten Ausgestaltung wird zur Temperaturermittlung ein Quotienten-Pyrometer verwendet. Dieser ist sehr robust und kann selbst unter den rauen Bedingungen eine Stahlwerks, welche sich z.B. äußern durch Rauch, Staub, hoher Verschmutzungsgrad, zuverlässig betrieben werden.

In einer weiteren vorteilhaften Ausführungsform der Erfindung wird anhand der ermittelten mittleren Temperatur eine Menge wenigstens eines Zuschlagsstoff ermittelt, welcher dem Flüssigmetall in einem späteren Prozessschritt zugeführt wird. Aufgrund der Kenntnis der genauen Temperatur der Schmelze bzw. des Flüssigmetalls kann die Zugabe von Zuschlagsstoffen besser gesteuert werden. Ist z.B. die Temperatur des Flüssigmetalls erhöht, kann bspw. mehr Zugschlagsstoff auf einmal zugeführt werden, da auch für das "mehr" an Zuschlagsstoff eine kritische Temperatur nicht unterschritten wird. Hierdurch wird einerseits die Prozessdauer für die Sekundärmetallurgie verkürzt und zum anderen Energie eingespart. Unter Zuschlagsstoff wird hierbei jeder bewusst dem Flüssigmetall zuzuführende Stoff verstanden, um bspw. dessen Eigenschaften, z.B. Gießverhalten oder chemische Zusammensetzung, einzustellen.

In einer weiteren vorteilhaften Ausführungsform des erfindungsgemäßen Verfahrens wird anhand der ermittelten Temperatur eine Menge von Kühlschrott zum Kühlen des Flüssigmetalls ermittelt wird, welcher dem Flüssigmetall in einem späteren Prozessschritt zugeführt wird. Kühlschrott kann vorgesehen werden, wenn das Flüssigmetall zu warm ist. Aufgrund der genauen Kenntnis der Temperatur des Flüssigmetalls, dessen Menge und der Wärmekapazitäten kann die Menge an benötigtem Kühlschrott zum Erreichen einer Zieltemperatur vergleichsweise genau bestimmt werden, wodurch Zeit und Ressourcen eingespart werden. Es ist ein zielgerichtetes Kühlen auf eine bestimmte Temperatur möglich.

Besonders vorteilhaft ist es, wenn anhand der ermittelten Temperatur wenigstens ein Betriebsparameter für die metallurgische Vorrichtung für nachfolgend abzustechende Flüssigmetalle, insbesondere mit im Wesentlichen gleicher Zusammensetzung, eingestellt wird. Dies erlaubt eine Prozessoptimierung für das zukünftige Verarbeiten bzw. Erzeugen von Flüssigmetall in dem entsprechenden Behältnis. Bspw. können hierdurch Temperatur gesenkt oder andere Betriebsparameter derart beeinflusst werden, dass die metallurgische Vorrichtung wirtschaftlicher arbeitet, ohne Qualitätseinbußen für den Prozess oder das Produkt hinnehmen zu müssen.

In einer weiteren vorteilhaften Ausführungsform des erfindungsgemäßen Verfahrens wird der Zustand der Messumgebung während der Erfassung elektromagnetischer Strahlen vom Abstichkanal überwacht und in Abhängigkeit von einer Bewertung des Zustands bestimmt, ob eine Störung vorliegt, wobei bei Vorliegen einer Störung die Signale der während der Störung vom Abstichstrahl emittierten detektierten elektromagnetischen Strahlen nicht für eine weitere Auswertung, insbesondere für eine Ermittlung einer mittleren Temperatur oder einer neuen mittleren Temperatur, herangezogen werden.

Treten bei der Erfassung der vom Abstichstrahl emittierten elektromagnetischen Strahlungen Messung Störungen, z.B. aufgrund außergewöhnlicher starker Flammenbildung oder Rauchbildung - verursacht etwa durch die Zugabe von Ferromangan oder anderer Legierungselemente, so ist es sinnvoll, die während der Störung erfassten Daten nicht für eine weitere Auswertung zu verwenden. Denn durch die Störung kann eine erhebliche Ungenauigkeit bei der Temperaturermittlung verursacht sein, welche sich bei der Auswertung entsprechend fortpflanzt.

Vielmehr ist es vorteilhaft, die während der Störung erfassten Daten nicht weiterzuverwerten, sondern die Ermittlung einer mittleren Temperatur oder einer neuen mittleren Temperatur nur auf Basis von Daten durchzuführen, welche auf vom Abstichstrahl emittierten elektromagnetischen Strahlen basieren, die während des störungsfreien Betriebs erfasst wurden.

Ein Zustand der Messumgebung ist insbesondere dann als gestört anzusehen, wenn aus den vom Abstichstrahl während der Störung emittierten elektromagnetischen Strahlen eine Temperatur ermittelt wird, die um mehr als 5 %, insbesondere mehr als 10 %, von der Ist-Temperatur des Abstichstrahls während der Störung abweicht.

Als Messumgebung wird insbesondere der Bereich zwischen Abstichstrahl und Detektor betrachtet. Liegen in diesem Bereich die Genauigkeit der Temperaturermittlung verringernde Umstände vor, wie etwa starke Rauchentwicklung oder Flammenbildung, so kann dies für die Temperaturermittlung nachteilig sein.

Die Bewertung, ob eine Störung vorliegt oder nicht, kann manuell, bspw. durch Einschätzung des Bedienpersonals bspw. aufgrund von Erfahrungswerten, insbesondere Temperatur-Erfahrungswerten beim Abstich, erfolgen, oder automatisch bspw. mittels wenigstens einer Kamera, welche die Messumgebung erfasst und über eine Erkennungssoftware den Zustand der Messumgebung ableitet.

Gegebenenfalls können auch mehrere Detektoren vorgesehen sein, so dass wenigstens einer der Detektoren bei Vorliegen einer Störung für wenigstens einen der anderen Detektoren die vom Abstichstrahl emittierten elektromagnetische Strahlen im störungsfreien Betrieb erfassen kann, d.h. für diesen Detektor liegt keine Störung innerhalb seines Messbereichs vor.

Bei einer manuellen und/oder automatischen Überwachung bzw. Bewertung des Zustands der Messumgebung wird vorzugsweise der Zeitpunkt des Eintritts der Störung und der Zeitpunkt des Endes der Störung erfasst und der Signalverarbeitungseinrichtung zugeführt. Diese selektiert dann anhand der Zeitangaben die während der Störung erfassten Daten aus und zieht diese für eine weitere Auswertungen nicht heran.

Der vorrichtungsmäßige Teil der Aufgabe wird gelöst durch eine Signalverarbeitungseinrichtung zur Ermittlung einer Temperatur für einen Ausschnitt eines aus einem Behältnis abfließenden Abstichstrahls aus Flüssigmetall, mit einem maschinenlesbaren Programmcode umfassend Steuerbefehle, welche die Signalverarbeitungseinrichtung zur Durchführung des Verfahrens gemäß einem der vorhergehenden Ansprüche veranlassen.

Ferner wird der vorrichtungsmäßige Teil der Aufgabe gelöst durch eine Metallurgische Vorrichtung zur Herstellung und/oder Verarbeiten von Flüssigmetall, mit einem Behältnis zur Aufnahme von Flüssigmetall mit einer Abstichöffnung, einem Detektor zur Erfassung elektromagnetischer Strahlung, wobei der Detektor derart im Bereich des Behältnisses angeordnet ist, dass mittels diesem bei einem Abstechvorgang von einem aus der Abstichöffnung austretenden aus Flüssigmetall gebildeten Abstichstrahl emittierte elektromagnetische Strahlen erfassbar sind, und mit einer Signalverarbeitungseinrichtung gemäß Anspruch 13, wobei der Detektor und die Signalverarbeitungseinrichtung miteinander wirkverbunden sind.

Besonders vorteilhaft, ist die metallurgische Vorrichtung als Elektrolichtbogenofen, Konverter oder Pfanne ausgebildet. Das Behältnis stellt in diesen Fällen entweder die metallurgische Vorrichtung selbst dar, oder der zur metallurgischen Vorrichtung gehörende Tiegel.

Weitere Vorteile ergeben sich aus einem Ausführungsbeispiel, welches anhand der nachfolgenden schematischen Zeichnungen genauer erläutert wird. Es zeigen:

FIG 1    eine Ausschnitt einer metallurgischen Vorrichtung mit einer Temperaturerfassungseinrichtung,

FIG 2    ein schematisches Ablaufdiagramm für eine Ausführungsform des erfindungsgemäßen Verfahrens.

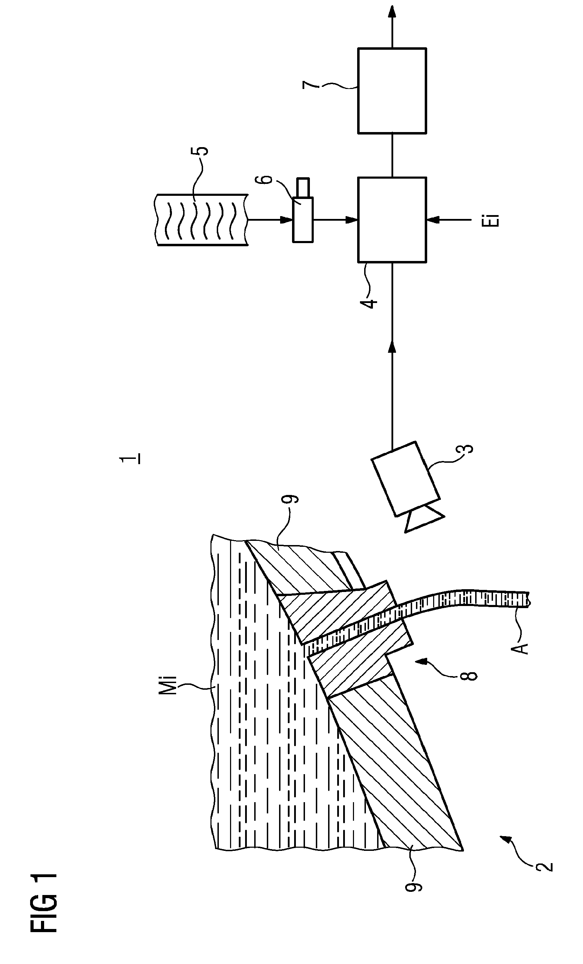

FIG 1 zeigt einen Ausschnitt einer metallurgischen Vorrichtung 1, welche ein Behältnis 2 zur Aufnahme von Flüssigmetall Mi umfasst. Im vorliegenden Fall ist die metallurgische Vorrichtung als Konverter ausgebildet. Die Erfindung ist jedoch nicht auf eine bestimmte metallurgische Vorrichtung beschränkt.

Mittels des Behältnisses 2 werden unterschiedlichste Flüssigmetalle, d.h. Flüssigmetalle mit unterschiedlichen chemischen Zusammensetzungen, verarbeitet, weshalb das in FIG 1 gezeigte Flüssigmetall mit einem Index i versehen ist, welches somit eine bestimmte i-te Zusammensetzung aufweist.

Das Behältnis 2 weist eine übliche Feuerfestausmauerung 9 auf und einen Abstichkanal 8 zum Ausbringen des Flüssigmetalls Mi aus dem Behältnis 2.

Wird das Flüssigmetall abgestochen so wird hierzu häufig das Behältnis um einen Drehpunkt bzw. eine Drehachse gedreht bzw. gekippt, so dass das Flüssigmetall durch den Abstichkanal aus dem Behältnis abfließt. Bei als Elektrolichtbogenöfen ausgebildeten metallurgischen Vorrichtungen findet sich häufig ein exzentrischer Bodenabstich. Bei Konvertern befindet sich der Abstichkanal häufig im Bereich des sogenannten Konverterhuts. In beiden Fällen werden die Behältnisse während des Abstechvorgangs gekippt, um möglichst das gesamte Flüssigmetall aus dem Behältnis 2 auszubringen.

Mit Beginn des Abstechvorgangs durchläuft das Flüssigmetall Mi den Abstichkanal 8. Nach Austritt aus dem Abstichkanal 8 bildet das Flüssigmetall einen Abstichstrahl A, von welchem nun die Temperatur erfasst werden soll.

Hierzu ist im Bereich des Abstichstrahls A ein Detektor 3 angeordnet, welcher die vom Abstichstrahl A emittierten elektromagnetischen Strahlen detektiert. Der Erfassungsbereich des Detektors 3 ist derart gewählt bzw. eingestellt, dass ein vorgesehener Ausschnitt des Abstichstrahls erfasst wird. Insbesondere sollte einerseits eine möglichst große Breite des Abstichstrahls abgedeckt werden. Andererseits sollten jedoch möglichst keine elektromagnetischen Strahlen detektiert werden, welche von Schlacke emittiert werden. Vorzugsweise wird die Temperatur des Ausschnitts gemittelt vom Detektor 3 erfasst. Eine Mittelung kann jedoch bspw. im Fall von bildgebenden Kameras auch nachträglich erfolgen.

Die vom Abstichstrahl A emittierten elektromagnetischen Strahlen werden vom Detektor 3 detektiert, gewandelt und der Signalverarbeitungseinrichtung 4 zugeführt.

Als Detektor 3 können bspw. thermische Strahlungsaufnehmer, verwendet werden, wie etwa Bolometer, Thermosäulen, Pyrometer oder auch elektrische Strahlungsaufnehmer, wie etwa halbleiterbasierte Sensoren. Die Wahl des konkreten Detektors 3 kann sich an deren Zeitkonstanten, Wellenlängenbereichen und Empfindlichkeiten orientieren.

Für die Temperaturermittlung von Metallen sind Temperatur- und Wellenlängenbereich vorzugsweise so zu wählen, dass ein möglichst hoher Emissionsgrad der zu messenden Oberfläche vorliegt. Dabei ist es zweckmäßig, die kürzeste für die Messung verfügbare Wellenlänge zu nutzen, da sich bei vielen Metallen der Messfehler mit zunehmender der Wellenlänge erhöht.

Die Signalverarbeitungseinrichtung 4 ist mit maschinenlesbarem Programmcode 5 ausgerüstet, welcher Steuerbefehle umfasst, die die Signalverarbeitungseinrichtung 4 in die Lage versetzen, eine möglichst exakte Temperatur aus den elektromagnetischen Strahlen zu ermitteln. Insbesondere ist im maschinenlesbaren Programmcode implementiert, dass für jedes Flüssigmetall Mi ein individueller, auf das Flüssigmetall abgestimmter Emissionsgrad Ei heranzuziehen ist. Der maschinenlesbare Programmcode 5 kann mittels eines Speichermediums 6, z.B. einem USB-Stick, einer CD oder anderen gebräuchlichen Speichermedien, auf der Signalverarbeitungseinrichtung 4 hinterlegt werden.

Der Signalverarbeitungseinrichtung 4 wird ebenfalls der zum Flüssigmetall Mi korrespondierende Emissionsfaktor Ei zur Verfügung gestellt, um die Temperatur aus den elektromagnetischen Strahlen des Abstichstrahls A zu ermitteln.

Der Emissionsgrad Ei, welcher für das jeweilige Flüssigmetall Mi abhängig von dessen Zusammensetzung verwendet wird, kann der Signalverarbeitungseinrichtung manuell zugeführt werden. Alternativ und bevorzugt erhält die Signalverarbeitungseinrichtung den jeweiligen "richtigen" Emissionsgrad für die abzustechende Schmelze automatisiert aus einer Datenbank, insbesondere einer Tabelle. Diese Tabelle kann direkt auf der Signalverarbeitungseinrichtung 4 hinterlegt sein. Alternativ kann die Signalverarbeitungseinrichtung 4 auch auf aktuelle Prozessinformationen zurückgreifen, indem diese bspw. mit dem Leitsystem der Anlage kommuniziert. Dabei wird der Signalverarbeitungseinrichtung 4 übermittelt, welche Schmelze derzeit im Behältnis vorliegt, so dass ein entsprechender Emissionsgrad Ei für die Ermittlung der Temperatur des abzustechenden Flüssigmetalls Mi aus der Datenbank ausgewählt und für die Temperaturermittlung herangezogen werden kann.

Abhängig von den Steuerbefehlen des Programmcodes ermittelt die Signalverarbeitungseinrichtung bspw. eine mittlere Temperatur des gesamten abgestochenen Flüssigmetallvolumens. Diese Temperatur steht dann einer Steuer- und/oder Regeleinrichtung 7 zur Verfügung, welche auf Basis der Kenntnis der exakten mittleren Temperatur des Flüssigmetalls Mi, weitere Maßnahmen für nachfolgende Prozesse veranlassen kann.

Bspw. kann die Steuer- und/oder Regeleinrichtung 7 den weiteren Prozessverlauf für das Flüssigmetall Mi beeinflussen. Diese kann etwa anhand der ermittelten mittleren Temperatur eine weitere Energieeintrag oder austrag aus dem Flüssigmetall steuern, mögliche oder erforderliche Mengen an Zuschlagsstoffen oder Legierungselemente für nachfolgende Prozessschritte ermitteln usw.

Durch die exakte Kenntnis der Temperatur mit einer Genauigkeit von $\pm$10 °C, können die nachfolgenden metallurgischen Prozesse entsprechend angepasst werden, wodurch sich Durchsatz und Kostenvorteile für den Betreiber eines Stahlwerks ergeben.

So war es bspw. mit Hilfe einer Ausführungsform des erfindungsgemäßen Verfahrens möglich, die Abstichtemperaturen in einem Konverter ohne Nachteile um bis zu 30 °C zu senken. Dies brachte erhebliche Energieeinsparungen mit sich, was die Wirtschaftlichkeit des Gesamtprozesses für den Betreiber erhöht hat.

Diese Absenkung war lediglich dadurch möglich, dass die mittlere Temperatur des abgestochenen Flüssigmetalls sehr genau bestimmt werden konnte und das in effizienter, zeitnaher und kostengünstiger Weise. Durch diese exakte Temperaturmessung wurde festgestellt, dass für die nachfolgenden metallurgischen Prozesse derart hohe mittlere Temperaturen des Flüssigmetalls, wie sie bisher beim Abstich vorlagen, nicht erforderlich waren. Es konnten entsprechende Maßnahmen ergriffen werden, um die Abstichtemperatur zu senken.

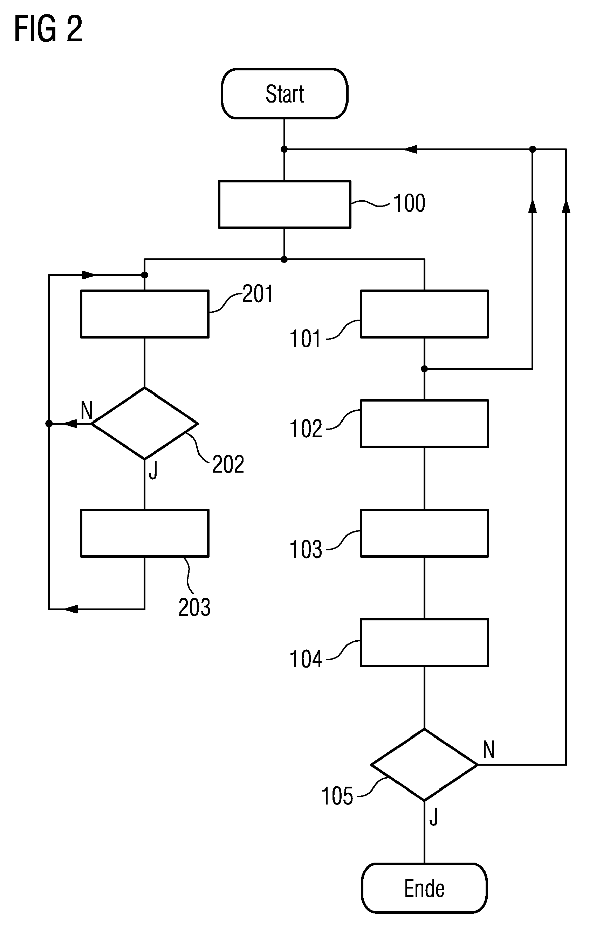

FIG 2 zeigt ein schematisches Ablaufdiagramm für eine Ausführungsform des erfindungsgemäßen Verfahrens. Für das Ablaufdiagramm wird davon ausgegangen, dass der Abstichvorgang eingeleitet wurde. Der Detektor ist im Bereich der Abstichöffnung des Behältnisses angeordnet und auf den sich ausbildenden Abstichstrahl gerichtet.

In einem ersten Verfahrensschritt 100 erfolgt eine Erfassung der elektromagnetischen Strahlung, insbesondere Infrarotstrahlung, für einen festgelegten Ausschnitt des Abstichstrahls. Die elektromagnetische Strahlung wird kontinuierlich erfasst.

In einem Verfahrensschritt 102 wird aus den erfassten Temperaturen ein zeitlicher Temperaturverlauf T(t) ermittelt und aus dem zeitlichen Temperaturverlauf, ggf. bei ungleichmäßigem Abstichstrahl unter Einbeziehung des zeitlichen Massestroms des Flüssigmetalls, eine mittlere Temperatur $T_m$ ermittelt, z.B. gemäß (bei konstantem Massenstrom des Abstichstrahls)

$$T_m = \frac{1}{T_0} \int_0^{T_0} T(t)\,dt$$

Hierbei stellt $T_0$ die Dauer des Abstechvorgangs dar, t die die Zeit und T(t) die Temperatur abhängig von der Zeit. Bei der Ermittlung der Temperatur für den jeweiligen Zeitpunkt werden keine Strahlenanteile berücksichtigt, welche von der Schlacke emittiert wurden, da diese einen anderen Emissionsgrad und eine andere Temperatur aufweisen als das Flüssigmetall.

Ferner erfolgt die Ermittlung der Temperatur vorzugsweise bei der kleinsten Wellenlänge, mit welcher eine Messung noch möglich ist. Hierdurch werden Messfehler weiter verringert.

Das Flüssigmetall wird nach Austritt aus dem Behältnis einer Pfanne zugeführt, welche in der Regel thermisch auf das in die Pfanne einfließende Flüssigmetall vorbereitet wird. Die Pfanne wird in der Regel auf eine vorgesehene Temperatur vorgeheizt.

In einem Verfahrensschritt 103 wird aus der Temperatur des Flüssigmetalls und aus der vorgesehenen Pfannentemperatur eine neue mittlere Temperatur des Flüssigmetalls in der Pfanne berechnet. Gegebenenfalls können auf Basis dieser Temperaturermittlung weitere Maßnahmen und Aktionen für nachfolgende Prozessschritte getroffen werden.

In einem Verfahrensschritt 104 erfolgt auf Grundlage der neuen mittleren Temperatur eine Ermittlung einer Menge an Zuschlagsstoffen und/oder Kühlschrott, um zeitminimal das Flüssigmetall einer Stranggießanlage zuführen zu können.

Parallel zu obigen Verfahrensschritten 101 bis 104 erfolgt in einem Verfahrensschritt 201 anhand der vom Detektor erfassten elektromagnetischen Strahlung eine Auswertung hinsichtlich der Position des Detektors relativ zum Abstichstrahl.

In einem Verfahrensschritt 202 wird geprüft, ob aufgrund eines Kippvorgangs für das Behältnis der Detektor die elektromagnetische Strahlung noch in gewünschter Qualität, d.h. für den vorgesehenen Ausschnitt, erfasst bzw. ob der Detektor dem Abstichstrahl nachgeführt werden muss.

Liegt keine optimale Positionierung des Detektors relativ zur Bahnkurve des Abstichstrahls mehr vor, so wird der Detektor dem Abstichstrahl entsprechend nachgeführt. Dies erfolgt in einem Verfahrensschritt 203.

Die Prüfung, ob der Detektor dem Abstichstrahl nachzuführen ist, erfolgt kontinuierlich während des Abstechvorgangs. Dadurch wird sichergestellt, dass während des gesamten Abstechvorgangs, sofern dieser mit einem Kippen des Behältnisses einhergeht, eine exakte Temperaturbestimmung möglich ist, obwohl der Abstichstrahl während des Abstechvorgangs seine Position bzw. Lage ändert.

Die Temperaturermittlung und Nachführung des Detektors erfolgt solange, bis der Abstechvorgang beendet ist bzw. bis das Flüssigmetall möglichst vollständig aus dem Behältnis ausgebracht ist. Die Abfrage, ob das Verfahren zur Temperaturermittlung beenden werden soll, erfolgt in einem Verfahrensschritt 105.

**Patentansprüche**

1.  Verfahren zur Ermittlung einer Temperatur von Flüssigmetall (Mi), wobei das Flüssigmetall (Mi) aus einem einer metallurgischen Vorrichtung (1) zugeordneten Behältnis (2) mittels eines Abstichvorgangs ausgebracht wird, wobei das ausgebrachte Flüssigmetall (Mi) einen Abstichstrahl (A) bildet, **dadurch gekennzeichnet, dass** die Temperatur wenigstens eines Ausschnitts des Abstichstrahls (A) kontinuierlich während des Abstechvorgangs anhand vom Abstichstrahl (A) emittierter elektromagnetischer Strahlen unter Verwendung eines Emissionsgrads (Ei) ermittelt wird, wobei der zur Ermittlung der Temperatur herangezogene Emissionsgrad (Ei) abhängig von der Zusammensetzung des auszubringenden Flüssigmetalls (Mi) ist.

2.  Verfahren nach Anspruch 1, **dadurch gekennzeichnet, dass** für eine Vielzahl an Zusammensetzungen des innerhalb des Behältnis erzeugten und/oder verarbeiteten Flüssigmetalls (Mi) ein jeweiliger Emissionsgrad (Ei) des jeweiligen Flüssigmetalls (Mi) für die Ermittlung der Temperatur datentechnisch bekannt und, insbesondere aus einer Datenbank, abrufbar ist, wobei zur Ermittlung der Temperatur des auszubringenden Flüssigmetalls (Mi) der zum auszubringenden Flüssigmetall (Mi) korrespondierende Emissionsgrad (Ei) automatisch abgerufen wird und zur Ermittlung der Temperatur für das Flüssigmetall (Mi) herangezogen wird.

3.  Verfahren nach einem der vorhergehenden Ansprüche, **dadurch gekennzeichnet, dass** aus den ermittelten Temperaturen eine mittlere Temperatur des abgestochenen Flüssigmetalls (Mi) ermittelt (102) wird.

4.  Verfahren nach einem der vorhergehenden Ansprüche, **dadurch gekennzeichnet, dass** das ausgebrachte Flüssigmetall (Mi) einer Pfanne zugeführt wird, wobei eine neue mittlere Temperatur für das Flüssigmetall unter Einbeziehung einer Temperatur der Pfanne ermittelt (103) wird und/oder eine Temperatur der Pfanne in Abhängigkeit von der ermittelten mittleren oder neuen mittleren Temperatur des Flüssigmetalls (Mi) eingestellt wird.

5.  Verfahren nach einem der vorhergehenden Ansprüche, **dadurch gekennzeichnet, dass** der Ausschnitt flächig ausgebildet ist und die Temperatur für den flächigen Ausschnitt räumlich gemittelt wird.

6.  Verfahren nach einem der vorhergehenden Ansprüche, **dadurch gekennzeichnet, dass** die Temperatur auf Basis der kürzesten zur Messung verfügbaren Wellenlänge der elektromagnetischen Strahlung ermittelt (102) wird.

7.  Verfahren nach einem der vorhergehenden Ansprüche, **dadurch gekennzeichnet, dass** der Abstechvorgang ein Kippen des Behältnisses (2) umfasst, wobei der Abstichstrahl (A) während des Kippens seine Bahnkurve verändert, wobei der die elektromagnetische Strahlung detektierende Detektor (3) der geänderten Bahnkurve des Abstichstrahls (A) nachgeführt (203) wird.

8.  Verfahren nach einem der vorhergehenden Ansprüche, **dadurch gekennzeichnet, dass** die von einer Schlacke emittierte elektromagnetische Strahlung nicht zur Ermittlung der Temperatur des Flüssigmetalls (Mi) herangezogen (102) wird.

9.  Verfahren nach einem der vorhergehenden Ansprüche, **dadurch gekennzeichnet, dass** zur Temperaturermittlung ein Quotienten-Pyrometer verwendet wird.

10. Verfahren nach einem der vorhergehenden Ansprüche, **dadurch gekennzeichnet, dass** anhand der ermittelten mittleren Temperatur eine Menge wenigstens eines Zuschlagsstoff ermittelt (104) wird, welcher dem Flüssigmetall (Mi) in einem späteren Prozessschritt zugeführt wird.

11. Verfahren nach einem der vorhergehenden Ansprüche,
**dadurch gekennzeichnet, dass** anhand der ermittelten Temperatur eine Menge von Kühlschrott zum Kühlen des Flüssigmetalls (Mi) ermittelt (104) wird, welcher dem Flüssigmetall (Mi) in einem späteren Prozessschritt zugeführt wird.

12. Verfahren nach einem der vorhergehenden Ansprüche,
**dadurch gekennzeichnet, dass** anhand der ermittelten Temperatur wenigstens ein Betriebsparameter für die metallurgische Vorrichtung (1) für nachfolgend abzustechende Flüssigmetalle (Mi), insbesondere mit im Wesentlichen gleicher Zusammensetzung, eingestellt wird.

13. Signalverarbeitungseinrichtung (4) zur Ermittlung einer Temperatur für einen Ausschnitt eines aus einem Behältnis (2) abfließenden Abstichstrahls (A) aus Flüssigmetall (Mi), mit einem maschinenlesbaren Programmcode (5) umfassend Steuerbefehle, welche die Signalverarbeitungseinrichtung (4) zur Durchführung des Verfahrens gemäß einem der vorhergehenden Ansprüche veranlassen.

14. Metallurgische Vorrichtung (1) zur Herstellung und/ oder zum Verarbeiten von Flüssigmetall (Mi), mit einem Behältnis (2) zur Aufnahme von Flüssigmetall (Mi) mit einer Abstichöffnung, mit einem Detektor (3) zur Erfassung elektromagnetischer Strahlung, wobei der Detektor (3) derart im Bereich des Behältnisses (2) angeordnet ist, dass mittels diesem bei einem Abstechvorgang von einem aus der Abstichöffnung austretenden aus Flüssigmetall (Mi) gebildeten Abstichstrahl (A) emittierte elektromagnetische Strahlen erfassbar sind, und mit einer Signalverarbeitungseinrichtung (4) gemäß Anspruch 13, wobei der Detektor (3) und die Signalverarbeitungseinrichtung (4) miteinander wirkverbunden sind.

15. Metallurgische Vorrichtung nach Anspruch 14,
**dadurch gekennzeichnet, dass** die metallurgische Vorrichtung als Elektrolichtbogenofen, Pfanne oder Konverter ausgebildet ist.

FIG 1

EP 2 410 305 A1

## FIG 2

Europäisches
Patentamt

European
Patent Office

Office européen
des brevets

# EUROPÄISCHER RECHERCHENBERICHT

**Nummer der Anmeldung**

EP 10 17 0308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 177873 A (NIPPON STEEL CORP) 6. Juli 2006 (2006-07-06) * Absätze [0003] - [0005], [0020] - [0021]; Abbildung 6 * ----- | 1,2,6,8, 9,12-15 | INV. G01J5/00 |
| X | EP 1 440 750 A1 (HERBST BREMER GOLDSCHLAEGEREI [DE]) 28. Juli 2004 (2004-07-28) * Absatz [0006] - Absatz [0011]; Abbildungen 1,2 * ----- | 1,2,6,8, 9,12-15 | |
| X | US 2 683 988 A (MACHLER RAYMOND C ET AL) 20. Juli 1954 (1954-07-20) * Spalte 1, Zeilen 5-25 * ----- | 1 | |

**RECHERCHIERTE SACHGEBIETE (IPC)**

G01J

~~Der vorliegende Recherchenbericht wurde für alle Patentans~~prüche erstellt

| Recherchenort | Abschlußdatum der Recherche | Prüfer |
|---|---|---|
| München | 30. November 2010 | Hambach, Dirk |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes
    Dokument

EPO FORM 1503 03.82 (P04C03)

Europäisches
Patentamt
European
Patent Office
Office européen
des brevets

**Nummer der Anmeldung**

EP 10 17 0308

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1, 2, 6, 8, 9, 12-15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

**MANGELNDE EINHEITLICHKEIT**
**DER ERFINDUNG**
**ERGÄNZUNGSBLATT B**

Nummer der Anmeldung

EP 10 17 0308

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    1. Ansprüche: 1, 2, 6, 8, 9, 12-15

        Temperaturmessung von Flüssigmetallen mit unterschiedlicher Emissivität
                ---

    2. Ansprüche: 3-5, 7, 10, 11

              Einstellung der Temperatur eine Schmelzpfanne
                ---

**ANHANG ZUM EUROPÄISCHEN RECHERCHENBERICHT**
**ÜBER DIE EUROPÄISCHE PATENTANMELDUNG NR.**
EP 10 17 0308

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2010

| Im Recherchenbericht angeführtes Patentdokument | Datum der Veröffentlichung | Mitglied(er) der Patentfamilie | Datum der Veröffentlichung |
|---|---|---|---|
| JP 2006177873 A | 06-07-2006 | JP 4146420 B2 | 10-09-2008 |
| EP 1440750 A1 | 28-07-2004 | AT 363354 T<br>DE 10303124 B3<br>ES 2285278 T3<br>US 2004182538 A1 | 15-06-2007<br>28-10-2004<br>16-11-2007<br>23-09-2004 |
| US 2683988 A | 20-07-1954 | KEINE | |

EPO FORM P0461

Für nähere Einzelheiten zu diesem Anhang : siehe Amtsblatt des Europäischen Patentamts, Nr.12/82